# FASCICULE DE BREVET EUROPEEN

(11) **EP 1 226 298 B1**
(45) Date de publication et mention de la délivrance du brevet: **28.11.2007**
(21) Numéro de dépôt: 00958719.7
(22) Date de dépôt: 22.08.2000
(51) Int. Cl.: D04H 3/04

(54) **PROCEDE ET DISPOSITIF DE FABRICATION DE PLAQUES COMPOSITES**
VERFAHREN UND VORRICHTUNG ZUR HERSTELLUNG VON VERBUNDPLATTEN
METHOD AND DEVICE FOR MAKING COMPOSITE PLATES

(30) Priorité: 27.08.1999 FR 9910842
(43) Date de publication de la demande: 31.07.2002
(73) Titulaire: Saint-Gobain Vetrotex France S.A., 73000 Chambéry (FR)
(72) Inventeur: LOUBINOUX, Dominique, F-73290 La Motte Servolex (FR)
(74) Mandataire: Muller, René
(86) Numéro de dépôt international: PCT/FR2000/002354
(87) Numéro de publication internationale: WO 2001/016418

(56) Documents cités:
- DE-A- 19 643 871
- FR-A- 2 096 928
- FR-A- 2 743 822
- FR-A- 2 758 340
- FR-A- 2 761 380
- US-A- 4 172 748
- US-A- 4 680 213
- US-A- 5 014 755

## Description

La présente invention concerne un procédé direct et un dispositif de mise en oeuvre dudit procédé pour la fabrication de plaques composites. Elle concerne également les produits composites obtenus.

Les plaques composites sont habituellement formées d'au moins deux matières de points de fusion différents, dont généralement une matière organique et une matière de renforcement, la matière de renforcement se présentant par exemple sous forme de fils noyés dans la matrice organique. La fabrication des plaques composites est généralement longue entre l'élaboration des fils de renforcement et le moment où les plaques sont finalement obtenues, les structures utilisées pour réaliser les plaques n'étant généralement pas les fils tels quels mais des structures complexes incorporant les fils et ayant nécessité des étapes de traitement préalables.

En particulier, il est déjà connu de fabriquer des plaques composites, sous forme de panneaux ou de pièces courbes, à partir de tissus formés à la fois de fils de renforcement et de fils thermoplastiques, en empilant les tissus puis en pressant à chaud l'empilage ainsi réalisé, comme décrit dans le certificat d'utilité FR 2 500 360. Un tel procédé présente notamment le désavantage d'être un procédé discontinu.

Il est également connu (brevet FR 2 743 822) de fabriquer des plaques composites à partir de tissus verre/matière organique que l'on dépose en continu sur un convoyeur puis que l'on préchauffe dans un four à air chaud avant de les introduire dans une « presse à bandes » (du type de celle décrite dans le brevet US-A-4 277 539) où ils sont successivement chauffés et refroidis, tout en étant comprimés. Bien que ce procédé soit plus rapide que le procédé précédemment décrit, il est souhaitable d'améliorer encore la fabrication des plaques composites en proposant des procédés plus rapides et économiques, tout en assurant l'obtention de produits conservant de bonnes propriétés, en particulier mécaniques.

La présente invention a pour but de fournir un procédé amélioré par rapport aux procédés existants pour la fabrication de plaques composites, en particulier un procédé plus rapide et économique que les procédés existants.

Ce but est atteint grâce au procédé selon l'invention comprenant au moins les étapes suivantes :
- on entraîne suivant une direction donnée un faisceau de fils parallèles,
- on associe à ce faisceau une nappe de fil(s) orienté(s) transversalement par rapport à cette direction donnée, le faisceau de fils et/ou la nappe de fil(s) comprenant au moins une matière organique et au moins une matière de renfort,
- on chauffe l'association, se déplaçant suivant la direction donnée, et on la fixe (ou fige), par l'action de la chaleur et/ou d'une pression puis par refroidissement, de façon à former une bande composite,
- on collecte la bande sous forme d'une ou plusieurs plaques composites.

Les différentes étapes telles que l'entraînement du faisceau, l'association de la nappe... se font avantageusement en continu, ce terme regroupant également un entraînement et une association par saccades comme dans le cas d'une association avec un chariot (ce mode de réalisation étant explicité ultérieurement).

Par « plaque » (de même que par « bande »), on entend selon la présente invention un élément peu épais par rapport à sa surface, généralement plan (mais pouvant éventuellement être courbé) et rigide bien que présentant le cas échéant une souplesse suffisante pour pouvoir être collecté et stocké sous forme enroulée. De façon générale, il s'agit d'un élément plein mais il peut dans certains cas être ajouré (le terme « plaque » et le terme « bande désignent ainsi également par extension des structures de type grille ou tissu, selon l'invention).

Par "composite", on entend selon la présente invention l'association d'au moins deux matières de points de fusion différents, dont généralement une matière organique et une matière de renforcement, la teneur en matière de plus bas point de fusion (matière organique) étant au moins égale à 10 % en poids de ladite association..

Le procédé selon l'invention permet d'obtenir des plaques composites en une seule opération, à partir de structures de départ simples; en effet, le procédé selon l'invention utilise essentiellement des structures unidirectionnelles ou fils; en particulier, la matière de renfort utilisée dans le procédé selon l'invention est apportée uniquement sous forme de fils, distincts les uns des autres et non reliés au sein de structures « complexes » (en particulier « pluri-dimentionnelles », de type tissus ou grilles ...). L'utilisation des structures de renfort les plus simples dans la fabrication des plaques selon l'invention présente des avantages notamment en matière de coût et de facilité d'utilisation. A partir de ces structures simples, le procédé selon l'invention permet d'obtenir directement les plaques recherchées en nécessitant peu de main d'oeuvre et en supprimant les transferts d'une installation à une autre et les stockages intermédiaires. Il combine notamment une étape d'assemblage dans un plan transversal à la direction donnée et une étape de fusion et solidification de la matière organique pour aboutir au produit fini. Un tel procédé est particulièrement rapide et économique.

Par la suite, il sera simplement fait référence au « faisceau de fils pour désigner le faisceau de fils parallèles entraîné en continu suivant une direction donnée mentionné dans la définition de l'invention, de même que « la nappe de fil(s) » désignera la nappe de fil(s) orientés transversalement mentionnée dans la définition de l'invention, c'est-à-dire plus précisément un ou plusieurs fils réparti(s) transversalement sur la surface définie par le faisceau de fils parallèles.

Conformément à l'invention, au moins le faisceau de fils ou au moins la nappe de fils est formé(e) de fils d'au moins deux matières dont au moins une matière organique et au moins une matière de renfort, cette « matière de renfort » étant généralement une matière choisie parmi les matières communément utilisées pour le renforcement des matières organiques (telles que verre, carbone, aramide, etc...) ou pouvant éventuellement s'entendre au sens large comme une matière de point de fusion plus élevé que celui de la matière organique précitée; en d'autre termes, au moins le faisceau de fils ou au moins la nappe de fils est formé(e) de fils d'au moins deux matières présentant des points de fusion différents, la matière de plus bas point de fusion étant une matière organique. La matière organique est par exemple du polypropylène, du polyéthylène, du polybutylène téréphtalate, du polyéthylène téréphtalate, du polysulfure de phénylène, ou tout autre matière organique thermoplastique ou polymère choisi parmi les polyesters thermoplastiques, les polyamides, etc., la matière de renfort ou de plus haut point de fusion étant de préférence du verre.

De préférence, le faisceau et la nappe sont choisis de façon à ce que l'association du faisceau et de la nappe comprenne au moins 10 % en poids de matière organique et entre 20 et 90 % en poids de matière de renforcement (de préférence du verre), de préférence entre 30 et 85 % en poids de matière de renforcement et de façon particulièrement préférée entre 40 et 80 % en poids de matière de renforcement. De manière particulièrement avantageuse, l'association du faisceau et de la nappe est constituée de la matière de renforcement, dans les proportions citées, et de la matière organique dans une proportion représentant le complément à 100 % en poids de ladite association. Le faisceau et/ou la nappe peuvent comprendre en partie des fils constitués de l'une des matières et en partie des fils constitués de l'autre matière, ces fils étant disposés en alternance dans le faisceau et/ou la nappe et étant de préférence intimement mélangés. Le faisceau et/ou la nappe peuvent également comprendre des fils mixtes obtenus par la réunion et le bobinage simultané des fils de l'une des matières et des fils de l'autre matière, ces fils mixtes pouvant également être mélangés avec des fils de l'une des matières et/ou avec des fils de l'autre matière.

De préférence, l'association du faisceau et de la nappe et/ou le faisceau et/ou la nappe comprennent au moins 50 % (avantageusement au moins 80 % et de façon particulièrement préférée 100 %) en poids de fils co-mêlés, c'est-à-dire de fils composés de filaments de l'une des matières et de filaments de l'autre matière, les filaments étant mélangés au sein des fils (avantageusement de façon approximativement homogène), ces fils étant généralement obtenus par assemblage des filaments directement lors de la fabrication desdits filaments (selon les procédés décrits par exemple dans les brevets EP-A- 0 599 695 et EP-A- 0 616 055). L'utilisation de ces structures présentant au moins 50 % et de préférence au moins 80 % en poids de fils co-mêlés permet notamment d'obtenir des composites plus homogènes, présentant de bonnes propriétés mécaniques, la réalisation des plaques composites se faisant en outre dans un temps réduit et avantageusement à plus faible pression. De préférence, ces fils co-mêlés sont constitués de filaments de verre et de filaments de matière organique thermoplastique intimement mélangés.

De préférence, le faisceau de fils est constitué essentiellement de fils co-mélés et la nappe de fils est constituée de fils co-mélés continus (généralement parallèles) ou coupés et/ou de fils de renforcement continus (généralement parallèles) ou coupés et/ou de fils de matière organique continus (généralement parallèles) ou coupés.

Dans le procédé selon l'invention, les fils du faisceau et les fils de la nappe sont issus d'un ou plusieurs supports (ou enroulements) sur lesquels ils sont bobinés, les fils de la nappe étant le cas échéant coupés avant d'être associés aux fils du faisceau.

L'association du faisceau et de la nappe peut se faire de différentes façons, par exemple au moyen d'un ou plusieurs bras de dépose, ou au moyen d'un chariot portant les fils de la nappe disposés en parallèle, ou par dépose pneumatique des fils (avec éventuellement formation de boucles ou d'un mat), ou par dépose des fils coupés, etc.

Selon un premier mode de réalisation, l'association se fait en incorporant transversalement la nappe de fils (dans ce cas il s'agit préférentiellement de fils continus) dans le faisceau de fils parallèles, le faisceau étant séparé pour l'occasion en deux parties (une partie étant à l'aplomb de l'autre, par exemple un fil sur deux étant provisoirement relevé par rapport au plan initial du faisceau et éventuellement les autres fils étant provisoirement abaissés par rapport au plan initial) délimitant un espace à l'intérieur duquel sont projetés les fils à l'aide d'un métier à lance(s). Ce métier comprend par exemple deux lances équipées de pinces, une lance amenant par exemple les fils de la nappe au milieu du faisceau et la seconde lance sortant les fils de l'autre côté du faisceau, les fils étant alors coupés. Le métier peut aussi comprendre une seule lance.

Selon un second mode de réalisation, un chariot portant la nappe de fils sous forme de fils continus parallèles délivre la nappe dans le faisceau de fils parallèles, la nappe et le faisceau étant ensuite éventuellement cousus entre eux par l'intermédiaire de fils de liaison délivrés en continu (par exemple des fils fins en polyester ou en polypropylène ou en verre). Ces fils de liaisons sont par exemple mis en oeuvre par le mouvement périodique d'une barre à aiguilles transversale. Contrairement au mode de réalisation précédent, les fils de la nappe et du faisceau ne sont pas entremêlés, mais simplement lies entre eux. Les produits obtenus dans ce cas présentent un bon alignement (et donc peu d'embuvage) et une bonne aptitude à la déformation.

Selon un troisième mode de réalisation, l'association se fait en incorporant transversalement la nappe de fils (dans ce cas il s'agit également préférentiellement de fils continus) dans le faisceau de fils parallèles à l'aide d'un métier pour grilles à insertion de trames par bras rotatif(s). Ce métier peut comprendre un ou plusieurs bras rotatifs, les fils de la nappe provenant soit de bobine(s) disposée(s) sur la roue portant les bras de dépose, cette roue étant mue en rotation, soit de bobine(s) disposée(s) sur un autre support en mouvement (synchrone avec le mouvement des bras de dépose), soit de bobine(s) immobile(s), le ou les bras étant dans ce cas généralement des bras creux à passage axial. Les produits obtenus dans ce mode de réalisation présentent très peu d'embuvage et de très bonnes propriétés mécaniques.

Selon un quatrième mode de réalisation, l'association se fait en coupant des fils au dessus du faisceau de fils parallèles, les fils coupés s'orientant suivant diverses directions, en particulier suivant des directions transversales à celle du faisceau de fils, les fils coupés formant une nappe se superposant au faisceau de fils. De préférence dans ce mode, les fils tombent sur un ou plusieurs déflecteurs (il s'agit en règle générale d'une tôle - ou éventuellement de plusieurs tôles - inclinée suivant un angle de l'ordre de 45 à 80° par rapport au faisceau de fils) permettant de mieux les orienter suivant des directions transversales par rapport à la direction donnée, avant de se répartir sur le faisceau de fils parallèles.

Selon un cinquième mode de réalisation, l'association se fait en projetant transversalement un ou plusieurs fils sous forme d'un mat sur le faisceau de fils parallèles, la nappe de fils sous forme du mat étant éventuellement recouverte par un second faisceau de fils parallèles se déplaçant dans la même direction que le premier faisceau de fils parallèles.

L'association du faisceau et de la nappe de fils (se déplaçant avec une vitesse comprise par exemple entre 0,5 et 10 m/mn) passe dans au moins une zone où elle est chauffée à une température comprise entre les points de fusion des matières constituant l'association, cette température étant également inférieure à la température de dégradation de la matière présentant le point de fusion le plus bas. Par extension, la « température de dégradation » désigne, dans la présente invention, la température minimale à laquelle on observe une décomposition des molécules constituant la matière (comme traditionnellement défini et compris par l'homme de l'art) ou on observe une altération indésirable de la matière telle qu'une inflammation de la matière, une perte d'intégrité de la matière (se traduisant par un écoulement de la matière hors de la nappe) ou une coloration indésirable de la matière (par exemple un jaunissement). Cette température de dégradation peut être évaluée de façon traditionnelle par thermogravimétrie et/ou en notant la température minimale à laquelle l'un des effets précédemment cités se produit.

Dans la présente invention, l'association est chauffée suffisamment pour permettre la liaison d'une partie au moins des fils entre eux par l'intermédiaire de la matière de plus bas point de fusion après chauffage et/ou compression, et dans la plupart des cas (excepté dans le cas où l'on recherche plutôt une structure de type grille) pour permettre l'obtention d'une structure pleine ou approximativement pleine.

A titre d'exemples, la température de chauffage peut être de l'ordre de 190 à 230°C lorsque la nappe de fils est constituée de verre et de polypropylène, elle peut être de l'ordre de 280 à 310°C lorsque la nappe est constituée de verre et de polytéréphtalate d'éthylène (PET) et elle peut être de l'ordre de 270 à 280-290°C lorsque la nappe est constituée de verre et de polytéréphtalate de butylène (PBT).

Le chauffage de l'association peut être fait de plusieurs façons, par exemple à l'aide d'une machine de contre-collage à double-bandes, ou à l'aide de cylindres chauffés ou d'un dispositif d'irradiation tel qu'un dispositif à rayonnement infrarouge (sous forme, par exemple, d'un four ou de lampe(s) ou panneau(x) infrarouge...) et/ou au moins un dispositif à soufflage d'air chaud (par exemple un four à air chaud à convection forcée).

Le chauffage peut être suffisant pour permettre la fixation de l'association par l'intermédiaire de la matière organique fondue (thermofixation). Dans de nombreux cas cependant, l'association chauffée subit en outre une compression à l'aide d'un dispositif de compression, par exemple à l'aide d'au moins une calandre à deux cylindres. La force exercée sur l'association lors de son passage dans le dispositif de compression, par exemple lors de son passage simultané entre deux cylindres d'une calandre, est généralement de plusieurs kgf/cm, voire de plusieurs dizaines de kgf/cm. La pression exercée dans le dispositif de compression compacte la nappe de fils, la structure obtenue étant figée par refroidissement, ce refroidissement pouvant s'effectuer, au moins en partie, simultanément à la compression ou pouvant également s'effectuer après une étape de compression à chaud.

Le dispositif de compression peut comprendre au moins une calandre, notamment une calandre maintenue à une température inférieure au point de solidification de la matière de plus bas point de fusion (la calandre est par exemple à une température comprise entre 20 et 150°C) afin de la solidifier.

Le dispositif de compression peut aussi comprendre plusieurs calandres, notamment dans le cas de fortes épaisseurs et si l'on souhaite une très bonne planéité et/ou des vitesses de production élevées. Par ailleurs, dans le cas, notamment, où l'on utilise des matières de points de fusion élevés ou présentant une vitesse de cristallisation importante (par exemple des polyesters) et où l'on cherche à obtenir des plaques pleines ou approximativement pleines, il peut être souhaitable de chauffer la calandre (ou la première calandre au moins) du dispositif de compression à une température supérieure à 75°C et de préférence supérieure à 100°C voire supérieure à 150°C. Dans ce cas, les cylindres de la calandre chauffée sont préférentiellement recouverts d'un revêtement anti-adhérant à base de PTFE par exemple et/ou l'on déroule un film démoulant (en papier siliconé ou en toile de verre enduite de PTFE par exemple) entre chaque cylindre et la nappe de fils (ce film pouvant être éventuellement sous la forme d'une bande sans fin).

Selon un mode de réalisation de l'invention, le dispositif de compression peut également comprendre ou consister en une presse à bandes (munie, par exemple, de bandes en acier ou en toile de verre ou en toile d'aramide, la toile étant préférentiellement enduite de PTFE) comprenant une zone chaude (avec notamment une ou des calandres) suivie d'une zone froide (avec des éléments de refroidissement sous forme de barres, plaques... et éventuellement une ou des calandres).

Le refroidissement peut se faire dans le dispositif de compression (par exemple dans une calandre froide ou dans la zone froide d'une contre-colleuse plane à double bandes) ou peut se faire en dehors du dispositif de compression, par exemple par convection naturelle ou forcée. Afin d'accélérer son refroidissement, la bande composite obtenue au sortir du dispositif de compression précité peut passer sur une table de refroidissement dans laquelle circule de l'eau froide, cette table étant éventuellement légèrement bombée afin d'améliorer le contact avec la bande. Afin d'améliorer encore le refroidissement et/ou le contact, la table peut être associée à des rouleaux presseurs, de préférence refroidis (par circulation d'eau par exemple) et/ou à une (des) plaque(s) refroidie(s) en appui libre ou pressées et/ou à une ou des buses de soufflage d'air et/ou la bande peut être tirée par des rouleaux d'appel situés par exemple au sortir de la table.

La bande composite, après compression et refroidissement, peut être enroulée sur un mandrin dont le diamètre est fonction de l'épaisseur de la bande (la plaque formée correspond alors à la bande enroulée) ou peut être coupée par un dispositif de coupe (dispositif à massicot ou à scie circulaire par exemple) de façon à former plusieurs plaques.

Bien que le présent procédé soit essentiellement décrit du point de vue de l'association d'une nappe de fils et d'un faisceau de fils parallèles, il est bien évident que plusieurs nappes peuvent être associées à un ou plusieurs faisceaux de fils de la même façon que précédemment décrit. Il est notamment possible d'associer plusieurs nappes de fils afin de former des plaques d'épaisseur plus importante. Ainsi, selon un mode de réalisation de l'invention :
- on entraîne suivant une direction donnée un premier faisceau de fils parallèles,
- on associe à ce premier faisceau une nappe de fils orientés transversalement par rapport à cette direction donnée,
- on associe au faisceau et à la nappe au moins un second faisceau de fils parallèles suivant la direction donnée, le premier faisceau de fils et/ou la nappe de fils et/ou le second faisceau de fils comprenant au moins deux matières présentant des points de fusion différents,
- on chauffe l'association se déplaçant suivant la direction donnée et on la fixe, par l'action de la chaleur et/ou d'une pression, puis par refroidissement, de façon à former une bande composite,
- on collecte la bande sous forme d'une ou plusieurs plaques composites.

On peut également, avant compression de l'ensemble, dérouler un ou plusieurs films de surface sur une ou deux faces de l'association, ces films adhérant à chaud à l'association de faisceau(x) et nappe(s). Ces films peuvent être de matière(s) identique(s) ou différente(s) de celles (ou de l'une de celles) des fils de l'association (ils peuvent être métalliques, organiques...), ces films présentant préférentiellement une nature ou un un revêtement de nature proche de la nature de la matière de plus bas point de fusion présente dans l'association.

De façon plus générale, on peut mettre en surface de l'association et/ou introduire au sein de l'association d'autres structures sous forme de fils ou d'assemblage de fils, des structures alvéolées ou contenant des éléments sous forme de poudre, de granulés ou de liquide, des feuilles ou panneaux ou films, de nature essentiellement métallique ou polymérique ou minérale ou végétales, continues ou discontinues, et conférant des propriétés particulières aux plaques composites obtenues (renforcement supplémentaire par des fils de nature différente, amélioration des propriétés mécaniques, protection contre les rayonnements électromagnétiques, amélioration de l'isolation thermique ou acoustique, structures composites allégées, aptitude au moulage améliorée, aspect de surface...).

La bande obtenue dans le procédé selon l'invention peut être collectée sous forme d'enroulements (c'est à dire en quelque sorte sous forme d'une seule plaque composite enroulée) ou de plusieurs plaques découpées aux dimensions demandées par les utilisateurs.

La présente invention concerne également un dispositif de mise en oeuvre du procédé. Ce dispositif comprend :
a) un ou des dispositif(s) (ou organe(s)) d'alimentation d'au moins un faisceau de fils parallèles,
b) un ou des dispositif(s) (ou organe(s)) d'alimentation d'au moins une nappe de fils,
c) un ou des dispositifs d'orientation des fils de la nappe transversalement à la direction des fils parallèles du faisceau (par exemple, selon le mode de réalisation, un métier à lance(s), un métier à chariot, un métier pour grilles à insertion de trames par bras rotatifs ou un déflecteur, comme décrit dans les différents modes de réalisation explicités précédemment)
d) au moins un dispositif (ou organe) de chauffage de l'association du faisceau et de la nappe,
e) et au moins un dispositif de refroidissement de l'association.

Le dispositif selon l'invention peut également comprendre au moins un dispositif de compression et/ou au moins un dispositif de coupe et/ou au moins un dispositif de collecte des plaques composites. Le dispositif de refroidissement peut être aussi un dispositif de compression ou le dispositif selon l'invention peut comprendre au moins un dispositif de compression de l'association du faisceau et de la nappe distinct du dispositif de refroidissement.

Les plaques composites obtenues grâce à la combinaison d'étapes du procédé selon l'invention sont particulièrement économiques, et comprennent des filaments de matière de plus haut point de fusion (généralement des filaments de renforcement) noyés dans la plaque et disposés généralement pour une partie au moins d'entre eux dans le sens de défilement de la plaque lors de sa fabrication et de préférence également pour l'autre partie (ou au moins une autre partie de ces filaments) dans un sens transversal au sens de défilement. La plaque comprend ainsi au moins un ensemble de filaments de matière de plus haut point de fusion disposés de façon approximativement parallèle suivant une première direction et éventuellement au moins un second ensemble de filaments de matière de plus haut point de fusion disposés de façon approximativement parallèle suivant une seconde direction préférentiellement transversale à la première, tous ces filaments étant noyés dans la matière de plus bas point de fusion. Les plaques obtenues sont généralement d'épaisseur comprise entre quelques dixièmes de mm et environ 2 mm, sont rigides, faciles à couper et présentent de bonnes propriétés mécaniques. Elles peuvent être utilisées telles quelles dans des procédés de moulage ou en association avec d'autres produits. Elles peuvent être utilisées par exemple pour le thermoformage et le moulage de pièces en composites.

En règle générale, les plaques obtenues présentent peu d'embuvage (rapport entre la longueur du fil dans une direction et la longueur de la plaque dans cette direction, ce rapport étant évalué dans le cas de fils traversant la plaque dans cette direction et non pas dans le cas de fils coupés) dans chacune des directions préférentielles d'orientation des fils, l'embuvage étant généralement inférieur à 6 %, voire à 2 % ou à 1 % dans au moins une direction. Dans le cas des plaques obtenues en utilisant un métier pour grilles à insertion de trames par bras rotatifs, on remarque même l'absence totale ou quasi-totale d'embuvage.

D'autres avantages et caractéristiques de l'invention apparaîtront à la lumière des dessins suivants illustrant l'invention, sans toutefois la limiter dans lesquels :
- **la figure 1** représente une vue schématique d'un dispositif permettant une première mise en oeuvre de l'invention,
- **la figure 2** représente une vue schématique d'un dispositif permettant une deuxième mise en oeuvre de l'invention,
- **la figure 3** représente une vue schématique d'un dispositif permettant une troisième mise en oeuvre de l'invention,
- **la figure 4** représente une vue schématique d'un dispositif permettant une quatrième mise en oeuvre de l'invention,
- **la figure 5** représente une vue schématique d'une partie d'un dispositif de mise en oeuvre de l'invention,
- **la figure 6** représente une vue schématique d'une partie d'un dispositif de mise en oeuvre de l'invention.

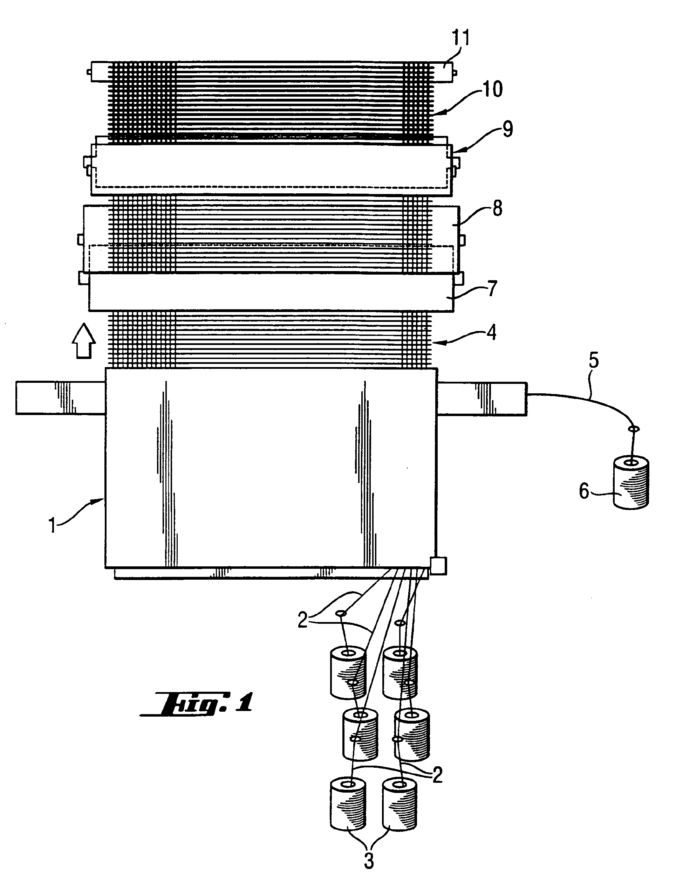

Dans le procédé illustré en figure 1, un métier à tisser à double lances 1 est alimenté par un faisceau de fils 2 (présentant par exemple 4 fils par cm) issus de "rovings" 3, les fils passant dans un peigne et arrivant parallèles dans le métier à tisser (partie non apparente et non représentée sur la figure), ces fils étant par exemple des fils composites composés de filaments de verre et de filaments de polypropylène mélangés entre eux.

Un tissu 4 est fabriqué par insertion par exemple à 120 coups/mn d'un fil 5 (issu d'un "roving" 6 et composé également de filaments de verre et de filaments de polypropylène) par cm, suivant un assemblage en toile.

Le tissu passe sous un premier cylindre 7 chauffé par exemple à 200°C et présentant par exemple un diamètre de l'ordre de 300 mm, puis passe sur un deuxième cylindre chauffé 8. Au contact des surfaces chaudes, les filaments de polypropylène fondent. Puis le produit passe dans l'entrefer d'une calandre 9 thermostatée par exemple à 40°C où il est refroidi et transformé en une plaque 10, par exemple d'environ 0,7 mm d'épaisseur composée par exemple de 40 % en poids de polypropylène et de 60 % en poids de filaments de verre orientés suivant deux directions perpendiculaires. Elle est ensuite, par exemple, bobinée sur un tube 11 de 100 mm de diamètre.

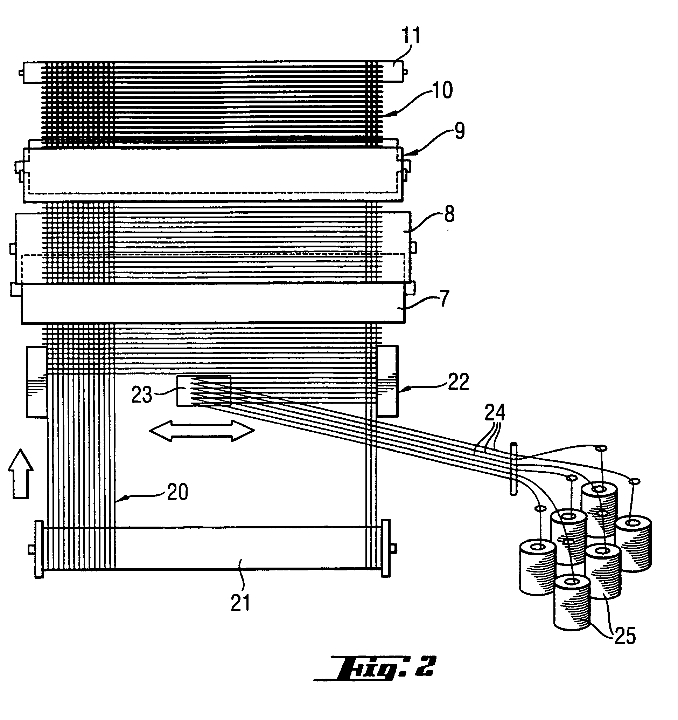

Dans la figure 2, un faisceau 20 de fils composites parallèles, composés par exemple de filaments de verre et de filaments de polypropylène, est déroulé à partir d'une ou plusieurs ensouples 21 et est amené à l'intérieur d'une machine à tricoter 22 équipée d'un chariot trameur 23 pouvant prendre plusieurs fils 24 simultanément (ces fils étant issus de "rovings" 25 et étant également des fils composites) et les déposer transversalement à la direction de déplacement du faisceau de fils, par exemple à raison de 2 fils par cm.

Ces fils 24 peuvent être liés aux fils du faisceau par une opération de tricotage simultanée, les fils de liaison étant des produits de titre - ou masse linéique - inférieur à 50 tex (g/km). Le produit cousu passe ensuite dans un dispositif de consolidation similaire à celui de la figure 1.

Dans une variante économique n'utilisant pas de fils de liaison, un deuxième faisceau de fils est amené sur la nappe de fils déposés par chariot pour venir les bloquer. L'ensemble non cousu est ensuite directement acheminé sur le système de consolidation et de bobinage.

Dans une autre variante plus élaborée, ou utilise plusieurs chariots trameurs mobiles sur deux axes dans le plan qui permettent de produire des surfaces multicouches de plusieurs directions, par exemple 0°/-45°/+45°/90°. Ces produits plus épais, peuvent être liés ou non par tricotage et peuvent être directement consolidés en ligne par fusion et refroidissement sous pression ou simplement thermofixés par fusion/refroidissement sans application de pression.

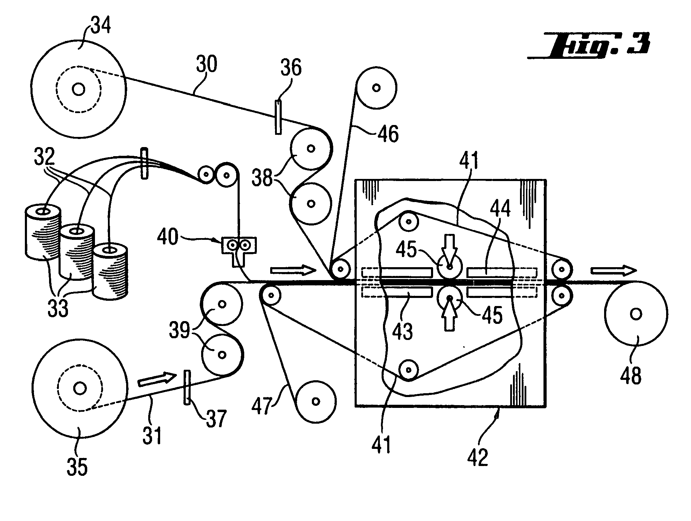

La figure 3 décrit un procédé de fabrication d'un produit plan en composite verre/thermoplastique consolidé dans lequel on utilise deux faisceaux de fils parallèles composites 30 et 31 et une nappe de fils composites 32 issus de "rovings" 33 déposés transversalement sous forme d'un mat à fils continus.

Les faisceaux de fils parallèles peuvent provenir de cantres non représentées sur la figure 3, ou être enroulés sur des ensouples 34 et 35, ces fils passant dans des peignes 36, 37 les maintenant parallèles, puis dans des cylindres d'appel 38, 39 permettant de réduire les tensions des fils avant leur entrée dans le dispositif de consolidation.

Entre ces faisceaux, plusieurs fils 32 sont déposés au moyen d'un chariot 40 se déplaçant transversalement au sens de déplacement des faisceaux, suivant un mouvement alternatif, afin de former un mat (ou une nappe de fils bouclés). Ce chariot est par exemple équipé d'un système d'appel à cylindres couplé à un éjecteur à air comprimé à effet venturi.

L'association des faisceaux et de la nappe passe ensuite entre les bandes continues 41 (en tissus de verre imprégnés de polytétrafluoroéthylène - PTFE -) d'une presse de contre-collage à plat 42. Cette presse de contre-collage comporte une zone de chauffage 43 et une zone 44 refroidie par une circulation d'eau, et des cylindres presseurs 45 entre ces deux zones qui viennent comprimer la matière thermoplastique fondue sous une pression voisine par exemple de 10 à 20 N/cm².

A la sortie de cette presse à double bandes, le produit présente un aspect homogène, cet aspect pouvant être amélioré par exemple par deux films 46 et 47 de polypropylène déposés de part et d'autre de l'association entre les bandes de la presse. La feuille rigide obtenue est ensuite soit bobinée sur un tube 48 par exemple de 100 mm de diamètre, soit découpée en continu en plusieurs rectangles au moyen de lames et d'une cisaille automatique, non représentés.

Dans une variante, la presse à double bandes est remplacée par un dispositif comportant deux rouleaux chauffés revêtus de PTFE, suivis par une calandre à deux cylindres refroidis. Les deux films de surface 46 et 47 de polypropylène sont dans ce cas préférentiellement introduits dans l'entrefer de la calandre froide.

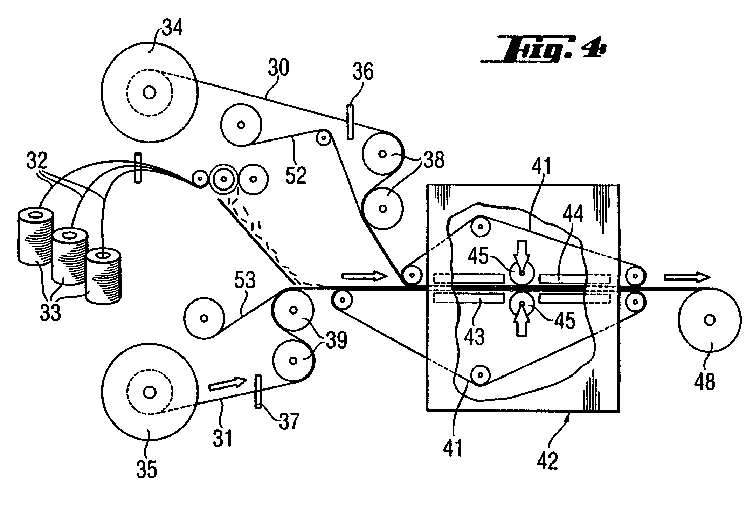

Le procédé représenté en figure 4 est proche de celui représenté sur la figure 3 (les mêmes références étant reprises pour les mêmes éléments). La différence se situe dans le type de mat qui est pris en sandwich entre les deux chaînes de fils parallèles. Ici, ce mat est par exemple formé par des fils 50 de verre pur coupés à 50 ou 100 mm de longueur, orientés dans le sens transversal par une tôle déflectrice 51 . Deux films 52 et 53 de polypropylène de par exemple 50 µm d'épaisseur peuvent éventuellement être introduits de part et d'autre de ce mat. Deux autres films de polypropylène, non représentés, peuvent également être ajoutés de chaque côté du produit pour en améliorer l'aspect de surface. Le produit obtenu peut être bobiné ou coupé en plaques.

Le mat à fil coupé peut être également constitué par du fil de même nature que celle des fils du faisceau (par exemple : 60 % de verre et 40 % de polypropylène). Dans ce cas, il n'est pas nécessaire d'introduire des films 52 et 53 dans le coeur du produit.

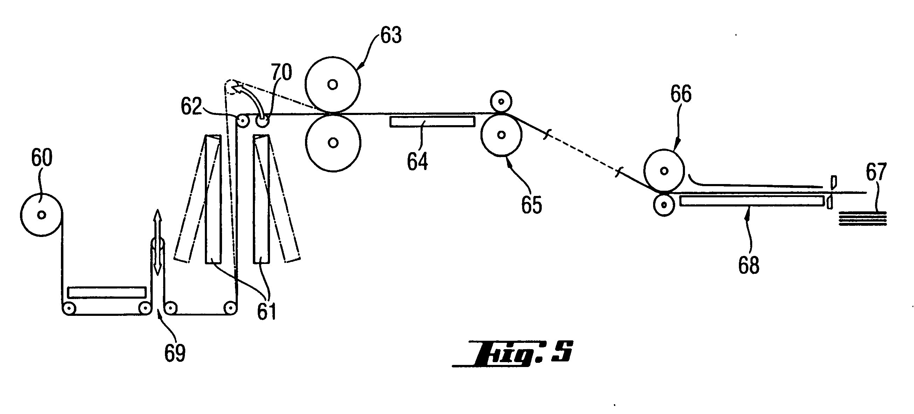

La partie de dispositif représentée en figure 5 est une variante de la partie "consolidation" des procédés représentés sur les figures 1 et 2. Elle fait suite par exemple à un métier à tisser ou à tricoter à insertion de trames 60. La fusion de la partie organique est réalisée sans contact au moyen de deux panneaux 61 à rayonnement infrarouge, escamotables pour éviter les risques de dégradation (ou de combustion) de l'association pendant les arrêts du métier. Après déflexion du produit partiellement fondu sur une barre thermostatée 62, celui-ci est compacté et refroidi dans l'entrefer d'une calandre 63 par exemple à 40°C, puis il passe éventuellement sur une table bombée de refroidissement 64. Le produit, entraîné par des rouleaux 65, 66 est ensuite découpé en plaques 67 à l'aide d'un ou plusieurs dispositifs de découpe 68.

Dans le cas d'un arrêt du métier à tisser (ou à tricoter), un accumulateur 69 tire en arrière la partie du produit située entre la fin des panneaux à infrarouge et l'entrée de la calandre, afin de ne pas avoir de zones de produit non compacté correspondant à chaque arrêt. De plus, pour éviter la dégradation du produit sur la barre de détour, thermostatée par exemple à 220°C, une barre d'éloignement 70 vient éloigner le produit.

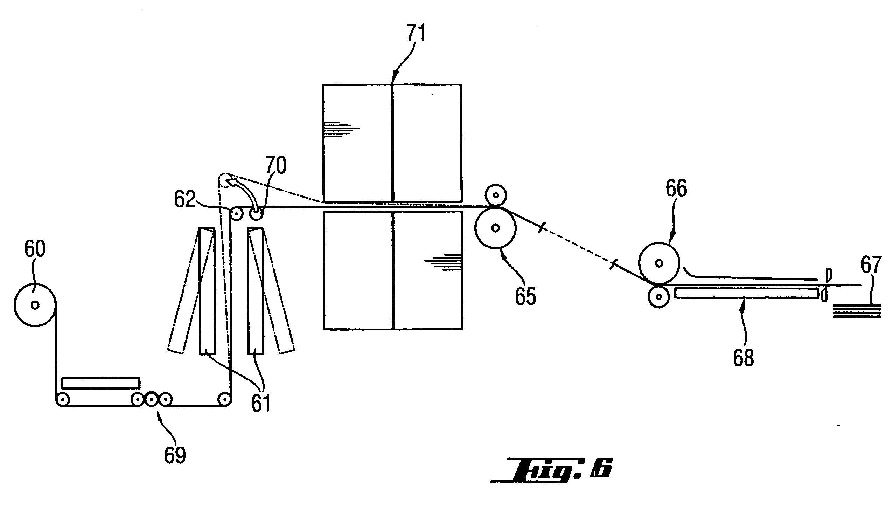

Le procédé en figure 6 est une variante du procédé décrit sur la figure 5 et qui conduit à des produits simplement thermofixés sans consolidation. Le système précédent de compactage/refroidissement par calandre et table bombée de refroidissement est ici remplacé par des caissons de soufflage d'air 71.

Les plaques réalisées selon la présente invention sont particulièrement adaptées à la réalisation d'articles composites par moulage.

## Revendications

1. Procédé de fabrication de plaques composites comprenant une matrice organique et des fils de renforcement dans lequel :
• on entraîne suivant une direction donnée un faisceau de fils parallèles,
• on associe à ce faisceau une nappe de fil(s) orienté(s) transversalement par rapport à cette direction donnée, les fils du faisceau et le(s) fil(s) de la nappe étant issus d'un ou plusieurs supports (ou enroulements) sur lesquels ils sont bobinés, le faisceau de fils et/ou la nappe de fil(s) comprenant au moins une matière organique et au moins une matière de renfort, et l'association comprenant au moins 10 % en poids de matière organique,
• on chauffe l'association, se déplaçant suivant la direction donnée, et on la fixe, par l'action de la chaleur et/ou d'une pression, puis par refroidissement, de façon à former une bande composite,
• on collecte la bande sous forme d'une ou plusieurs plaques composites.

2. Procédé selon la revendication 1, **caractérisé en ce que** la matière de renfort est apportée uniquement sous forme de fils, distincts les uns des autres et non reliés.

3. Procédé selon l'une des revendications 1 ou 2, **caractérisé en ce que** l'association comprend au moins 50 % en poids de fils co-mêlés.

4. Procédé selon la revendication 3, **caractérisé en ce que** les fils co-mêlés sont principalement constitués de filaments de verre et de filaments de matière organique thermoplastique intimement mélangés.

5. Procédé selon l'une des revendications 1 à 4, **caractérisé en ce que** la nappe de fils est une nappe de fil(s) continu(s) et est associée au faisceau de fils en utilisant un métier à lance(s).

6. Procédé selon l'une des revendications 1 à 4, **caractérisé en ce que** la nappe de fil(s) est une nappe de fils(s) continu(s) et est associée au faisceau de fils en utilisant un chariot trameur, les fils du faisceau et de la nappe étant éventuellement cousus entre eux par l'intermédiaire de fils de liaison.

7. Procédé selon l'une des revendications 1 à 4, **caractérisé en ce que** la nappe de fil(s) est une nappe de fil(s) continu(s) et **en ce que** L'association se fait en incorporant transversalement la nappe de fils dans le faisceau de fils parallèles à l'aide d'un métier pour grilles à insertion de trames par bras rotatifs.

8. Procédé selon l'une des revendications 1 à 4, **caractérisé en ce** la nappe de fil(s) est une nappe de fil(s) coupé(s) et en ce que l'association se fait en coupant des fils au dessus du faisceau de fils parallèles, les fils tombant de préférence préalablement sur un ou plusieurs déflecteurs.

9. Procédé selon l'une des revendications 1 à 4, **caractérisé en ce** l'association se fait en projetant transversalement un ou plusieurs fils sous forme d'un mat sur le faisceau de fils parallèles, la nappe de fils sous forme du mat étant éventuellement recouverte par un second faisceau de fils parallèles se déplaçant dans la même direction que le premier faisceau de fils parallèles.

10. Procédé selon l'une des revendications 1 à 9, **caractérisé en ce que** :
• on entraîne suivant une direction donnée un premier faisceau de fils parallèles,
• on associe à ce premier faisceau une nappe de fils orientés transversalement par rapport à cette direction donnée,
• on associe au faisceau et à la nappe au moins un second faisceau de fils parallèles suivant la direction donnée, le premier faisceau de fils et/ou la nappe de fils et/ou le second faisceau de fils comprenant au moins deux matières présentant des points de fusion différents,
• on chauffe l'association se déplaçant suivant la direction donnée et/on la fixe, par l'action de la chaleur et/ou d'une pression, puis par refroidissement, de façon à former une bande composite,
• on collecte la bande sous forme d'une ou plusieurs plaques composites.

11. Procédé selon l'une des revendications 1 à 10, **caractérisé en ce qu'**on met en surface de l'association et/ou on introduit au sein de l'association d'autre éléments conférant des propriétés particulières aux plaques composites obtenues.

12. Dispositif de mise en oeuvre du procédé selon l'une des revendications 1 à 11, ce dispositif comprenant:
a) un ou des dispositif(s) (ou organe(s)) d'alimentation d'au moins un faisceau de fils parallèles issus d'un ou plusieurs supports (ou enroulements),
b) un ou des dispositif(s) (ou organe(s)) d'alimentation d'au moins une nappe de fils issus d'un ou plusieurs supports (ou enroulements),
c) un ou des dispositifs d'orientation des fils de la nappe transversalement à la, direction des fils parallèles du faisceau,
d) au moins un dispositif (ou organe) de chauffage de l'association du faisceau et de la nappe,
e) et au moins un dispositif de refroidissement de l'association.

13. Dispositif selon la revendication 12, **caractérisé en ce qu'**il comprend en outre au moins un dispositif de compression et/ou au moins un dispositif de coupe et/ou au moins un dispositif de collecte des plaques composites.

14. Dispositif selon l'une des revendications 12 ou 13, **caractérisé en ce que** le dispositif d'orientation des fils de la nappe est un métier à lance(s), un métier à chariot, un métier pour grilles à insertion de trames par bras rotatifs ou un déflecteur.

15. Dispositif selon l'une des revendications 12 à 14, **caractérisé en ce qu'**il comprend en outre un accumulateur et/ou une barre d'éloignement tirant le produit en arrière et/ou éloignant le produit des zones de chauffage et/ou de compression en cas d'arrêt d'un dispositif en amont.

## Claims

1. Method for the manufacture of composite sheets comprising an organic matrix and reinforcing threads, in which:
• a bundle of parallel threads is driven in a given direction,
• a lap of thread or threads oriented transversely relative to this given direction is combined with this bundle, the threads of the bundle and the thread or threads of the lap emanating from one or more supports (or packages)on which they are wound, the bundle of threads and/or the lap of thread or threads comprising at least one organic material and at least one reinforcing material, and the combination comprising at least 10% by weight of organic material,
• the combination is heated, being displaced in the given direction, and is fixed by the action of heat and/or of pressure, then by cooling, so as to form a composite band,
• the band is collected in the form of one or more composite sheets.

2. Method according to Claim 1, **characterized in that** the reinforcing material is provided solely in the form of threads, separate from one another and unconnected.

3. Method according to one of Claims 1 and 2, **characterized in that** the combination comprises at least 50% by weight of co-blended threads.

4. Method according to Claim 3, **characterized in that** the co-blended threads consist mainly of glass filaments and of filaments of thermoplastic organic material which are intimately mixed.

5. Method according to one of Claims 1 to 4, **characterized in that** the lap of threads is a lap of continuous thread or continuous threads and is combined with the bundle of threads, using a rapier loom.

6. Method according to one of Claims 1 to 4, **characterized in that** the lap of thread or threads is a lap of continuous thread or continuous threads and is combined with the bundle of threads, using a weft insertion carriage, the threads of the bundle and of the lap being, if appropriate, sewn to one another by means of binding threads.

7. Method according to one of Claims 1 to 4, **characterized in that** the lap of thread or threads is a lap of continuous thread or continuous threads, and **in that** combination takes place by the lap of threads being incorporated transversely into the bundle of parallel threads with the aid of a netting loom with weft insertion by rotary arms.

8. Method according to one of Claims 1 to 4, **characterized in that** the lap of thread or threads is a lap of cut thread or cut threads, and **in that** combination takes place by the threads being cut above the bundle of parallel threads, the threads falling, preferably beforehand, onto one or more deflectors.

9. Method according to one of Claims 1 to 4, **characterized in that** combination takes place by one or more threads being projected transversely in the form of a mat onto the bundle of parallel threads, the lap of threads in the form of the mat being, if appropriate, covered by a second bundle of parallel threads which is displaced in the same direction as the first bundle of parallel threads.

10. Method according to one of Claims 1 to 9, **characterized in that**:
• a first bundle of parallel threads is driven in a given direction,
• a lap of threads oriented transversely relative to this given direction is combined with this first bundle,
• at least one second bundle of parallel threads is combined with the bundle and with the lap in the given direction, the first bundle of threads and/or the lap of threads and/or the second bundle of threads comprising at least two materials having different melting points,
• the combination is heated, being displaced in the given direction, and is fixed by the action of heat and/or of pressure, then by cooling, so as to form a composite band,
• the band is collected in the form of one or more composite sheets.

11. Method according to one of Claims 1 to 10, **characterized in that** other elements imparting particular properties to the composite sheets obtained are applied to the surface of the combination and/or introduced into the combination.

12. Apparatus for carrying out the method according to one of Claims 1 to 11, this apparatus comprising:
a) one or more devices (or members) for feeding at least one bundle of parallel threads emanating from one or more supports (or packages),
b) one or more devices (or members) for feeding at least one lap of threads emanating from one or more supports (or packages),
c) one or more devices for orienting the threads of the lap transversely to the direction of the parallel threads of the bundle,
d) at least one device (or member) for heating the combination of the bundle and of the lap,
e) and at least one device for cooling the combination.

13. Apparatus according to Claim 12, **characterized in that** it comprises, furthermore, at least one compression device and/or at least one cutting device and/or at least one device for collecting the composite sheets.

14. Apparatus according to one of Claims 12 and 13, **characterized in that** the device for orienting the threads of the lap is a rapier loom, a carriage loom, a netting loom with insertion by rotary arms, or a deflector.

15. Apparatus according to one of Claims 12 to 14, **characterized in that** it comprises, furthermore, an accumulator and/or a move-away bar drawing the product to the rear and/or moving the product away from the heating zones and/or for compression in the event of a stoppage of an upstream device.

## Patentansprüche

1. Verfahren zur Herstellung von Verbundplatten, die eine organische Matrix und Verstärkungsfäden umfassen, in welchem:
- ein Bündel aus parallelen Fäden in einer gegebenen Richtung gezogen wird,
- mit diesem Bündel eine Bahn aus einem Faden (Fäden), der (die) quer in Bezug auf diese gegebene Richtung orientiert ist (sind), verbunden wird, wobei die Fäden des Bündels und der Faden (die Fäden) der Bahn von einem oder mehreren Trägern (oder Spulen), auf welchen sie aufgewickelt sind, kommen, das Fadenbündel und/oder die Bahn aus einem oder mehreren Fäden mindestens ein organisches Material und mindestens ein Verstärkungsmaterial umfasst (umfassen) und der Verbund mindestens 10 Gew.-% organisches Material enthält,
- der Verbund erwärmt wird, wobei er sich in der vorgegebenen Richtung fortbewegt, und er durch die Einwirkung der Wärme und/oder von einem Druck und anschließend durch Abkühlen derart fixiert wird, dass sich ein Verbundband bildet, und
- das Band in Form einer oder mehrerer Verbundplatten gesammelt wird.

2. Verfahren nach Anspruch 1, **dadurch gekennzeichnet, dass** das Verstärkungsmaterial ausschließlich in Form von Fäden, die vereinzelt und nicht miteinander verbunden sind, zugeführt wird.

3. Verfahren nach Anspruch 1 oder 2, **dadurch gekennzeichnet, dass** der Verbund mindestens 50 Gew.-% Hybridfäden enthält.

4. Verfahren nach Anspruch 3, **dadurch gekennzeichnet, dass** die Hybridfäden hauptsächlich von innig vermischten Glasfilamenten und Filamenten aus einem thermoplastischen organischen Material gebildet werden.

5. Verfahren nach einem der Ansprüche 1 bis 4, **dadurch gekennzeichnet, dass** die Fadenbahn eine Bahn aus einem oder mehreren endlosen Fäden ist und mit dem Fadenbündel verbunden wird, indem eine Webmaschine mit einem oder mehreren Greiferstangenschusseinträgen verwendet wird.

6. Verfahren nach einem der Ansprüche 1 bis 4, **dadurch gekennzeichnet, dass** die Bahn aus einem oder mehreren Fäden eine Bahn aus einem oder mehreren endlosen Fäden ist und mit dem Fadenbündel verbunden wird, indem ein Schusslegewagen verwendet wird, wobei die Fäden des Bündels und der Bahn gegebenenfalls über Bindefäden miteinander vernäht werden.

7. Verfahren nach einem der Ansprüche 1 bis 4, **dadurch gekennzeichnet, dass** die Bahn aus einem oder mehreren Fäden eine Bahn aus einem oder mehreren endlosen Fäden ist, und dass der Verbund hergestellt wird, indem die Fadenbahn quer in das Bündel aus parallelen Fäden mittels einer Webmaschine für Gitter mit Eintragen der Schüsse durch Drehlitzen eingelegt wird.

8. Verfahren nach einem der Ansprüche 1 bis 4, **dadurch gekennzeichnet, dass** die Bahn aus einem oder mehreren Fäden eine Bahn aus einem oder mehreren Kurzfäden ist, und dass der Verbund hergestellt wird, indem Fäden über dem Bündel aus parallelen Fäden zerschnitten werden, wobei die Fäden vorzugsweise zuvor auf eine oder mehrere Ablenkeinrichtungen fallen.

9. Verfahren nach einem der Ansprüche 1 bis 4, **dadurch gekennzeichnet, dass** der Verbund hergestellt wird, indem ein oder mehrere Fäden in Form einer Matte auf das Bündel aus parallelen Fäden quer geschleudert werden, wobei die Fadenbahn in Form der Matte gegebenenfalls mit einem zweiten Bündel aus parallelen Fäden bedeckt ist, das sich in derselben Richtung wie das erste Bündel aus parallelen Fäden vorwärtsbewegt.

10. Verfahren nach einem der Ansprüche 1 bis 9, **dadurch gekennzeichnet, dass**
- ein erstes Bündel aus parallelen Fäden in einer vorgegebenen Richtung gezogen wird,
- mit diesem ersten Bündel eine Bahn aus Fäden, die quer in Bezug auf diese vorgegebene Richtung orientiert sind, verbunden wird,
- mit dem Bündel und der Bahn mindestens ein zweites Bündel aus in der vorgegebenen Richtung parallelen Fäden verbunden wird, wobei das erste Fadenbündel und/oder die Fadenbahn und/oder das zweite Fadenbündel mindestens zwei Materialien, die verschiedene Schmelzpunkte besitzen, umfassen,
- der Verbund erwärmt wird, wobei er sich in der vorgegebenen Richtung fortbewegt, und er durch die Einwirkung der Wärme und/oder von einem Druck und anschließend durch Abkühlen derart fixiert wird, dass sich ein Verbundband bildet, und
- das Band in Form einer oder mehrerer Verbundplatten gesammelt wird.

11. Verfahren nach einem der Ansprüche 1 bis 10, **dadurch gekennzeichnet, dass** auf die Oberfläche des Verbundes und/oder in den Verbund weitere Elemente gebracht werden, die den erhaltenen Verbundplatten spezielle Eigenschaften verleihen.

12. Vorrichtung zur Durchführung des Verfahrens nach einem der Ansprüche 1 bis 11, welche
a) eine oder mehrere Einrichtungen (oder ein oder mehrere Organe) für die Zuführung mindestens eines Bündels aus parallelen Fäden, die von einem oder mehreren Trägern (oder einer oder mehreren Spulen) kommen,
b) eine oder mehrere Einrichtungen (oder ein oder mehrere Organe) für die Zuführung mindestens einer Bahn aus Fäden, die von einem oder mehreren Trägern (oder einer oder mehreren Spulen) kommen,
c) eine oder mehrere Einrichtungen für die Orientierung der Fäden der Bahn quer zur Richtung der parallelen Fäden des Bündels,
d) mindestens eine Einrichtung (oder ein Organ) für die Erwärmung des Verbundes aus dem Bündel und der Bahn und
e) mindestens eine Einrichtung zum Abkühlen des Verbundes
umfasst.

13. Vorrichtung nach Anspruch 12, **dadurch gekennzeichnet, dass** sie außerdem mindestens eine Verdichtungseinrichtung und/oder mindestens eine Schneideinrichtung und/oder mindestens eine Sammeleinrichtung für die Verbundplatten umfasst.

14. Vorrichtung nach Anspruch 12 oder 13, **dadurch gekennzeichnet, dass** die Einrichtung zur Orientierung der Fäden der Bahn eine Lanzenwebmaschine, ein Magazinschusseintrag, eine Webmaschine für Gitter mit Eintragen der Schüsse durch Dreharme oder eine Ablenkeinrichtung ist.

15. Vorrichtung nach einem der Ansprüche 12 bis 14, **dadurch gekennzeichnet, dass** sie weiterhin einen Sammler und/oder eine Abziehstange umfasst, die das Erzeugnis nach hinten zieht und/oder das Erzeugnis von den Erwärmungszonen und/oder Verdichtungszonen im Falle des Anhaltens einer davor befindlichen Einrichtung entfernt.
